# EUROPÄISCHE PATENTSCHRIFT

(11) **EP 0 665 365 B1**
(45) Veröffentlichungstag und Bekanntmachung des Hinweises auf die Patenterteilung: **13.10.1999**
(21) Anmeldenummer: 94120859.7
(22) Anmeldetag: 28.12.1994
(51) Int. Cl.: F01N 3/28, F01N 3/02

(54) **Abgasbehandlungsvorrichtung**
Exhaust gas treating device
Dispositif de traitement de gaz d'échappement

(30) Priorität: 31.12.1993 DE 4345055
(43) Veröffentlichungstag der Anmeldung: 02.08.1995
(73) Patentinhaber: J. Eberspächer GmbH & Co., 73730 Esslingen (DE)
(72) Erfinder: Wirth, Georg, D-73230 Kirchheim (DE); Wörner, Siegfried, D-73734 Esslingen (DE); Zacke, Peter, D-73095 Albershausen (DE)
(74) Vertreter: Klunker . Schmitt-Nilson . Hirsch

(56) Entgegenhaltungen:
- EP-A- 0 471 175
- EP-A- 0 494 049
- DE-A- 3 834 779
- DE-A- 4 244 315
- FR-A- 2 224 639
- US-A- 4 322 388
- US-A- 5 250 269
- PATENT ABSTRACTS OF JAPAN vol. 7, no. 112 (M-215) (1257) 17. Mai 1983 & JP-A-58 032 917 (TOYOTA JIDOSHA) 26. Februar 1983

## Beschreibung

Gegenstand der Erfindung ist, erstens, eine Abgasbehandlungsvorrichtung
(a) die einen von einer Lagerungsmatte umgebenen, in einer Ummantelung aus Blech als Gehäuse gehalterten Abgasbehandlungskörper
(b) sowie einen doppelwandigen Zuströmtrichter und einen doppelwandigen Abströmtrichter aufweist, die an den Endbereichen der Ummantelung jeweils längs einer Umfangsnaht angeschweißt sind;
(c) wobei der Zuströmtrichter und der Abströmtrichter jeweils am Abgasbehandlungskörperseitigen Ende einen radial nach außen geführten Endbereich der Innenwand aufweisen;
(d) und wobei die Umfangsnahtschweißungen jeweils auf die Kante des Endbereichs der Trichter-Innenwand gerichtet ausgeführt sind, derart daß die Schweißnaht die Ummantelung, das dortige Ende der Trichter-Innenwand und das dortige Ende der Trichter-Außenwand miteinander verbindet,
dadurch gekennzeichnet,
(e) daß die Ummantelung jeweils mit axial verlaufendem Ende zu dem betreffenden, radial nach außen geführten Endbereich der Trichter-Innenwand geführt ist, wobei die Schweißnaht der jeweiligen Umfangsnahtschweißung das axial verlaufende Ende der Ummantelung, das radial nach außen geführte Ende der Trichter-Innenwand und das dortige Ende der Trichter-Außenwand miteinander verbindet
(= Anspruch 1 für FR, GB, IT, SE).

Gegenstand der Erfindung ist, zweitens, eine Abgasbehandlungsvorrichtung
(a) die einen von einer Lagerungsmatte umgebenen, in einer Ummantelung aus Blech als Gehäuse gehalterten Abgasbehandlungskörper
(b) sowie einen doppelwandigen Zuströmtrichter und einen doppelwandigen Abströmtrichter aufweist, die an den Endbereichen der Ummantelung jeweils längs einer Umfangsnaht angeschweißt sind;
(c) wobei der Zuströmtrichter und der Abströmtrichter jeweils am Abgasbehandlungskörper-seitigen Ende einen radial nach außen geführten Endbereich der Innenwand aufweisen;
(d) und wobei die Umfangsnahtschweißungen jeweils auf die Kante des Endbereichs der Trichter-Innenwand gerichtet ausgeführt sind, derart daß die Schweißnaht die Ummantelung, das dortige Ende der Trichter-Innenwand und das dortige Ende der Trichter-Außenwand miteinander verbindet,
dadurch gekennzeichnet,
(e) daß die Ummantelung jeweils mit axial verlaufendem Ende zu dem betreffenden, radial nach außen geführten Endbereich der Trichter-Innenwand geführt ist;
(f) und daß bei dem Zuströmtrichter und dem Abströmtrichter jeweils ein axial verlaufendes Außenwand-Ende zu dem betreffenden, radial nach außen geführten Endbereich der Trichter-Innenwand geführt ist,
(g) wobei die Schweißnaht der jeweiligen Umfangsnahtschweißung das axial verlaufende Ende der Ummantelung, das radial nach außen geführte Ende der Trichter-Innenwand und das axial verlaufende Ende der Trichter-Außenwand miteinander verbindet
(= Anspruch 1 nur für DE).

Aus der EP-A-0 471 175 ist eine Abgasbehandlungsvorrichtung mit den Merkmalen (a) , (b), (c) , (d) des Oberbegriffs des Anspruchs 1 bekannt. Dort ist die Ummantelung im jeweiligen Endbereich zunächst nach radial innen und dann wieder zu einem axial verlaufenden Ende abgebogen, so daß eine zurückgesetzte, umlaufende, äußere Aufnahmefläche und eine stirnseitige Anlagefläche für den Endbereich der Trichter-Innenwand gebildet sind. Die Schweißnaht erfaßt die Ummantelung an der Stelle der Abbiegung nach radial innen, also ein Stück von dem eigentlichen Ende der Ummantelung entfernt.

Aus der US-A-5 250 269 ist eine Abgasbehandlungsvorrichtung mit den Merkmalen (a), (b), (c) des Anspruchs 1 bekannt. Im Endbereich des Zuströmtrichters bzw. des Abströmtrichters ist die Trichter-Innenwand zunächst radial nach außen geführt, aber dann zu einem axial verlaufenden Ende abgebogen. Das Ende der Ummantelung und das Ende der Trichter-Außenwand liegen flächig außen auf dem axial verlaufenden Ende der Trichter-Innenwand, und dort ist die Ummantelung mit dem Zuströmtrichter bzw. dem Abströmtrichter verschweißt.

Die deutsche Patentanmeldung P 42 44 315.6 ist vor dem Prioritätstag des vorliegenden Patents angemeldet, aber im Prioritätsintervall des vorliegenden Patents offengelegt worden. Die dort offenbarte Abgasbehandlungsvorrichtung besitzt die Merkmale (a), (b), (c), (d), (e) des Anspruchs 1 (nur für DE) . Bei dem Zuströmtrichter und bei dem Abströmtrichter verläuft das Außenwandende radial, so daß die Merkmale (f) und (g) des Anspruchs 1 (nur für DE) nicht offenbart sind.

Bei der erfindungsgemäßen Abgasbehandlungsvorrichtung ist der doppelwandige Zuströmtrichter bzw. Abströmtrichter jeweils mittels einer Dreifachnaht, die besonders rationell erzeugt werden kann, mit der Ummantelung verschweißt. Diese Art der Verschweißung bringt ferner den ganz wesentlichen Vorteil mit sich, daß Toleranzen im Verhältnis der Querschnittsgröße der Ummantelung und der Querschnittsgröße des betreffenden Trichters gleichsam in der Schweißnaht aufgefangen werden. Dies wird weiter unten bei der Beschreibung von Ausführungsbeispielen noch weiter verdeutlicht.

Bevorzugte Ausgestaltungen der Erfindung sind in den abhängigen Ansprüchen angegeben.

Bei der Abgasbehandlungsvorrichtung gemäß Anspruch 5 (für FR, GB, IT, SE) bzw. Anspruch 4 (für DE) formt sich der Blechzuschnitt bzw. die Blechzuschnitte perfekt dem Umfang des Abgasbehandlungskörpers an, wobei Toleranzen sowohl in der Größe als auch in der Gestalt (Abweichung von der Sollgeometrie) selbsttätig ausgeglichen werden. Unabhängig davon, wo im Toleranzfeld die Abmessungen des gerade in die Ummantelung "verpackten" Abgasbehandlungskörpers liegen, wird die Vereinigung des Abgasbehandlungskörpers und der Ummantelung stets mit im wesentlichen der Soll-Einpreßkraft der Lagerungsmatte bewerkstelligt. Oder mit anderen Worten: Es ist nicht mehr die Lagerungsmatte, die für den Toleranzausgleich zwischen dem Abgasbehandlungskörper und dem Gehäuse sorgen muß, sondern das Gehäuse paßt sich dem Abgasbehandlungskörper in dessen Toleranzen an. Von besonders großer Bedeutung ist, daß ohne Probleme nicht nur im Querschnitt kreisrunde Abgasbehandlungskörper, sondern Abgasbehandlungskörper mit sämtlichen gängigen Querschnittsgeometrien "verpackt" werden können, z.B. oval, abgerundetdreieckig usw.

Als Abgasbehandlungskörper sind bei der Erfindung vorzugsweise Behandlungskörper zur katalytischen Beseitigung unerwünschter Abgasbestandteile oder Partikelfilter vorgesehen. Die erstgenannten Behandlungskörper bestehen in der Regel aus Keramik oder aus Metall mit einer Vielzahl von Längskanälen, wobei auf den Kanalwänden eine katalysatorhaltige Beschichtung aufgebracht ist. Rußfilter gibt es insbesondere in Form von Keramikkörpern mit wechselseitig am Ende geschlossenen Längskanälen, in Form von aus Fasern aufgebauten Filterkörpern und dergleichen. Als Lagerungsmatte können alle Lagerungselemente vorgesehen sein, wie sie bei der Halterung von Abgasbehandlungskörpern im zugeordneten Gehäuse üblich sind, insbesondere Lagerungsmatten aus temperaturbeständigen Fasern, sogenannte Quellmatten, die aufgrund eines Zusatzes zu einem fasrigen Grundmaterial bei Temperaturerhöhung im Volumen zunehmen, aber auch Metallgestricklagen. In der Regel ist die Lagerungsmatte einfach oder zuweilen auch mehrfach um den Umfang des Abgasbehandlungskörpers herumgelegt bzw. herumgewickelt.

Es wird darauf hingewiesen, daß man bei der Erfindung auch mehrere Abgasbehandlungskörper in Längsrichtung hintereinander vorsehen kann. In diesem Fall werden die mehreren Abgasbehandlungskörper mittels des erfindungsgemäßen Verfahrens mit einer gemeinsamen Ummantelung "verpackt".

Bei der Herstellung der erfindungsgemäßen Abgasbehandlungsvorrichtung kann mit einem Formwerkzeug arbeiten, das mehrere einzelne Formwerkzeugteile, jeweils für einen Teilbereich des Umfangs der Ummantelung aufweist. Hierbei ist besonders bevorzugt, daß mindestens einige der Formwerkzeugteile jeweils schwenkbar an einem Träger gelagert sind. Auf diese Weise läßt sich erreichen, daß der Blechzuschnitt überall längs des Umfangs des Abgasbehandlungskörpers mit im wesentlichen dem gleichen Anpreßdruck gegen den Abgasbehandlungskörper bzw. die Lagerungsmatte gedrückt wird. Ein ringsum gleichmäßiges Anliegen mit definierter Pressung gegen die Lagerungsmatte, und zwar auch bei nichtkreisrunder Querschnittsgeometrie des Abgasbehandlungskörpers, ist auf diese Weise mit einfachen Mitteln erreichbar.

Alternativ kann man vorzugsweise mit einem Formwerkzeug arbeiten, das eine oder mehrere Fluidkammern zum hydrostatischen Aufbringen von Verformungskraft auf den Blechzuschnitt bzw. die Blechzuschnitte über eine flexible Fluidkammerwand aufweist. Hierbei ergibt sich ein perfekt gleichmäßiges Anpressen der Ummantelung an die Lagerungsmatte und indirekt den darin enthaltenen Abgasbehandlungskörper.

"Zuströmtrichter" und "Abströmtrichter" sind gängige Fachbegriffe auf dem Gebiet der Abgasbehandlungsvorrichtungen und bezeichnen diejenigen Übergangsstücke, mit denen von einer Abgasleitung auf den größeren Querschnitt des Gehäuses des Abgasbehandlungskörpers übergegangen wird. Diese Übergangsstücke sind meistens nicht kegelförmig; es kommt lediglich auf die Schaffung eines strömungsgünstigen Übergangs zu dem größeren Gehäusequerschnitt an.

Vorzugsweise ist an der Längsnaht der Ummantelung eine Blechüberlappung vorhanden, an der geschweißt ist. Das Arbeiten mit einer Blechüberlappung hat den Vorteil, daß, je nach dem wie viel Umfangslänge des Blechs zum Ummanteln des Abgasbehandlungskörpers mit Lagerungsmatte "verbraucht" worden ist, dort ein Umfangslängenausgleich erfolgen kann.

Die Erfindung und Ausgestaltungen der Erfindung werden nachfolgend anhand zeichnerisch dargestellter Ausführungsbeispiele noch näher erläutert. Es zeigt:
- **Fig. 1**: stark schematisiert im Querschnitt ein Formwerkzeug und die damit erzeugte Verformung einer Ummantelung eines Abgasbehandlungskörpers;
- **Fig. 2**: stark schematisiert im Querschnitt ein Formwerkzeug anderer Ausführungsform;
- **Fig. 3**: schematisiert im Querschnitt ein Formwerkzeug, das mit Fluiddruck arbeitet;
- **Fig.4**: schematisiert im Querschnitt ein Formwerkzeug anderer Ausführungsform, das mit Fluiddruck arbeitet;
- **Fig. 5**: im Längsschnitt einen Teil einer Abgasbehandlungsvorrichtung, und zwar in der oberen Hälfte eine erste Ausführungsform und in der unteren Hälfte eine zweite Ausführungsform;
- **Fig. 6 und 7**: jeweils einen Ausschnitt in vergrößertem Maßstab aus **Fig. 5**, und zwar zwei unterschiedliche Schweißnahtkonfigurationen.

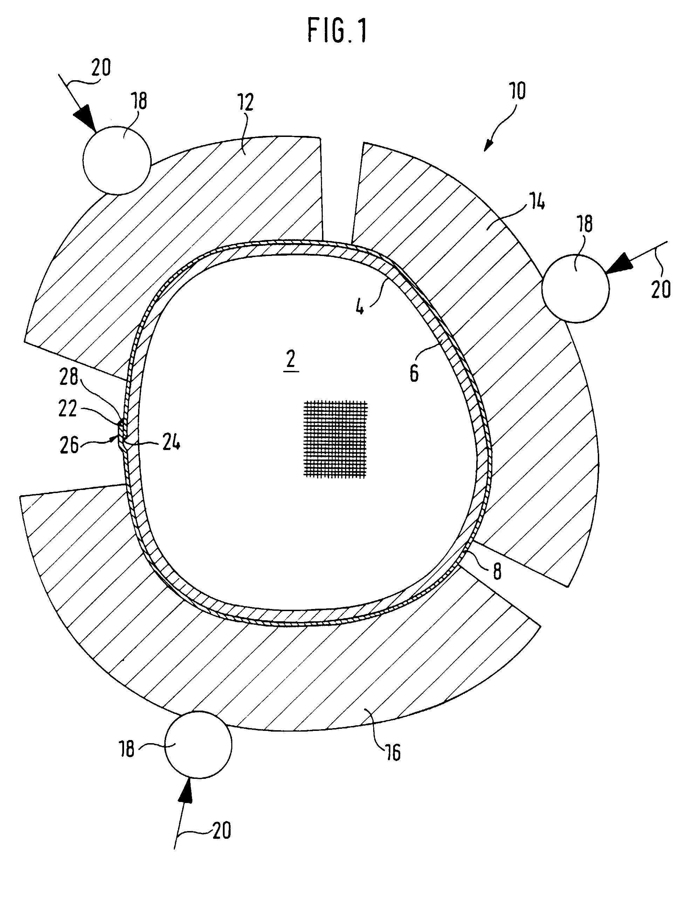

In **Fig. 1** erkennt man zunächst einen Abgasbehandlungskörper 2 in Form eines keramischen Monolithen mit einer Vielzahl von Längskanälen, der einen nicht-kreisrunden Querschnitt besitzt. Der Abgasbehandlungskörper 2 ist an seinem Umfang 4 von einer herumgelegten Lagerungsmatte 6, z.B. einer an sich bekannten Quellmatte, umgeben. Der Abgasbehandlungskörper 2 und die Lagerungsmatte 6 sind durch eine außenherum angebrachte Ummantelung 8 "verpackt".

Ein Formwerkzeug 10 ist stark schematisiert dargestellt. Es besteht aus drei Formwerkzeugteilen 12, 14, 16, die jeweils für die Verformung eines Teilbereichs des Umfangs der Ummantelung 8 vorgesehen sind, und die - wenn man in Umfangsrichtung fortschreitet - jeweils mit gewissem Zwischenabstand aneinander anschließen. In Axialrichtung (das ist die senkrecht zur Zeichnungsebene verlaufende Richtung) sind die Formwerkzeugteile 12, 14, 16 im wesentlichen so lang wie der Abgasbehandlungskörper 2 und die Ummantelung 8. Innenseitig sind die Formwerkzeugteile 12, 14, 16 so konturiert, wie es dem Soll-Umfangsverlauf des Abgasbehandlungskörpers 2 entspricht.

Mit einer axial verlaufenden Schwenkachse 18 für jedes Formwerkzeugteil 12, 14, 16 ist angedeutet, daß jedes Formwerkezeugteil Schwenkbewegungen um diese Achse ausführen kann. Nicht eingezeichnet ist jeweils ein Tragelement für jedes der Formwerkzeugteile, wobei die beschriebene Schwenkbewegungsmöglichkeit relativ zu dem betreffenden Tragelement besteht.

Zum Schließen des Formwerkzeugs 10 werden die drei Tragelemente und damit die drei Formwerkzeugteile 12, 14, 16 jeweils in Richtung des eingezeichneten Teils 20 auf den Abgasbehandlungskörper 2 zubewegt. Dadurch wird die Ummantelung 8 gegen die Lagerungsmatte 6 und damit indirekt gegen den Abgasbehandlungskörper 2 gedrückt, wobei die die Anpressung der Ummantelung 8 leistende Bewegung der Tragelemente und der Formwerkzeugteile mit einer derartigen Kraft erfolgt, daß an der Innenseite jedes Formwerkzeugteils im wesentlichen die gleiche Kraft pro Flächeneinheit auf die Ummantelung 8 ausgeübt wird. Die in Umfangsrichtung relativ kurzen Abschnitte der Ummantelung zwischen den einzelnen Formwerkzeugteilen werden gleichsam von links und rechts her mitverformt.

Ausgangsstufe für die Ummantelung ist ein im wesentlichen rechteckiger Blechzuschnitt, der schon vorgebogen in das geöffnete Formwerkzeug 10 eingelegt wird. Der Abgasbehandlungskörper 2 wird in Axialrichtung in den vorverformten Blechzuschnitt eingeschoben. Durch das Zusammenfahren der Formwerkzeugteile legt sich der Blechzuschnitt ringsum mit definierter Flächenpressung gegen die Lagerungsmatte 6 an; im Bereich der Längskanten 22, 24 des Blechzuschnitts wird eine Blechüberlappung 26 gebildet. Abschließend wird dann vor Entnahme des "verpackten" Abgasbehandlungskörpers 2 eine Längs-Schweißnaht 28 an der Blechüberlappung 26 geschweißt. Nach dem Auseinanderfahren der Formwerkzeugteile kann der mit der Ummantelung 8 "verpackte" Abgasbehandlungskörper 2 entnommen werden.

Die Verformung mittels der Formwerkzeugteile 12, 14, 16 ist in der Regel lediglich eine elastische Verformung, damit sich die Ummantelung 8 perfekt und eng dem Abgasbehandlungskörper 2 mit Lagerungsmatte 6 anpaßt.

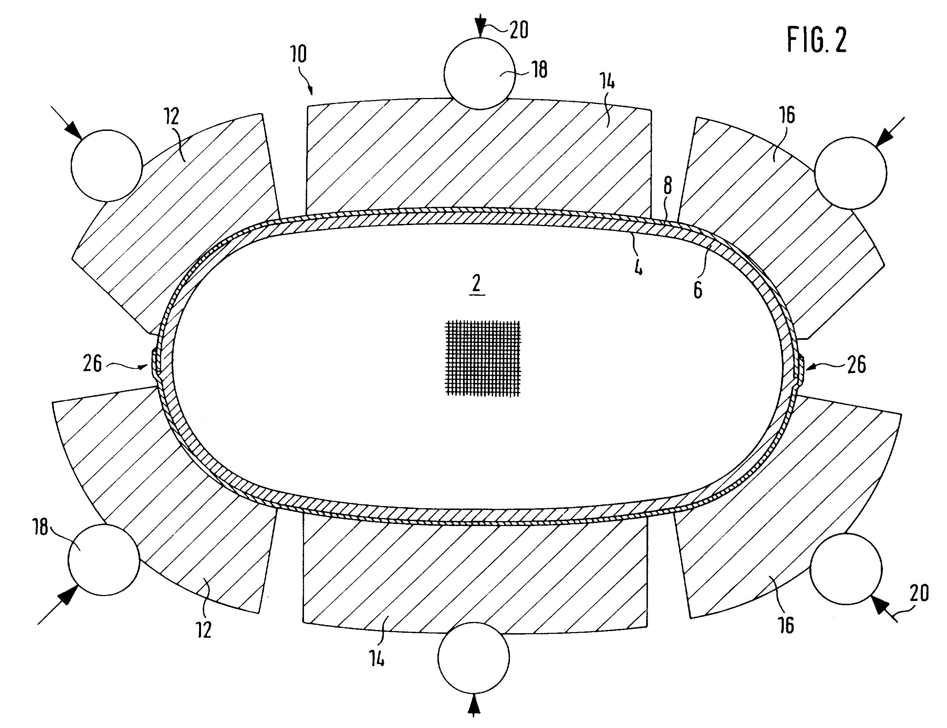

Die in **Fig. 2** gezeichnete Variante dient hauptsächlich der Veranschaulichung der Möglichkeit, daß man die Ummantelung 8 auch aus zwei Blechzuschnitten fertigen kann. Der dargestellte Abgasbehandlungskörper hat eine ovale Konfiguration und pro Ummantelungshälfte drei Formwerkzeugteile 12, 14, 16. Statt einer Längs-Schweißnaht 28 sind jetzt zwei Längs-Schweißnähte 28, jeweils an einer Blechüberlappung 26, vorhanden.

Insbesondere bei bestimmten, für die Schluß-Biegeverformung der Blechzuschnitte geometrisch "schwierigeren" Querschnitten kann es günstig sein, das Formwerkzeugteil bzw. die Formwerkzeugteile, die am weitesten von der schließlich herzustellenden Schweißnaht 28 entfernt sind, zeitlich vorgezogen in Schließrichtung zu bewegen; dies ist beim Ausführungsbeispiel gemäß **Fig. 1** das Formwerkzeugteil 14. Auf diese Weise schiebt sich beim Schließen des Formwerkzeugs der Blechzuschnitt automatisch mit seinen freien Längskanten zu dem Bereich hin, wo danach die Schweißnaht 28 anzubringen ist.

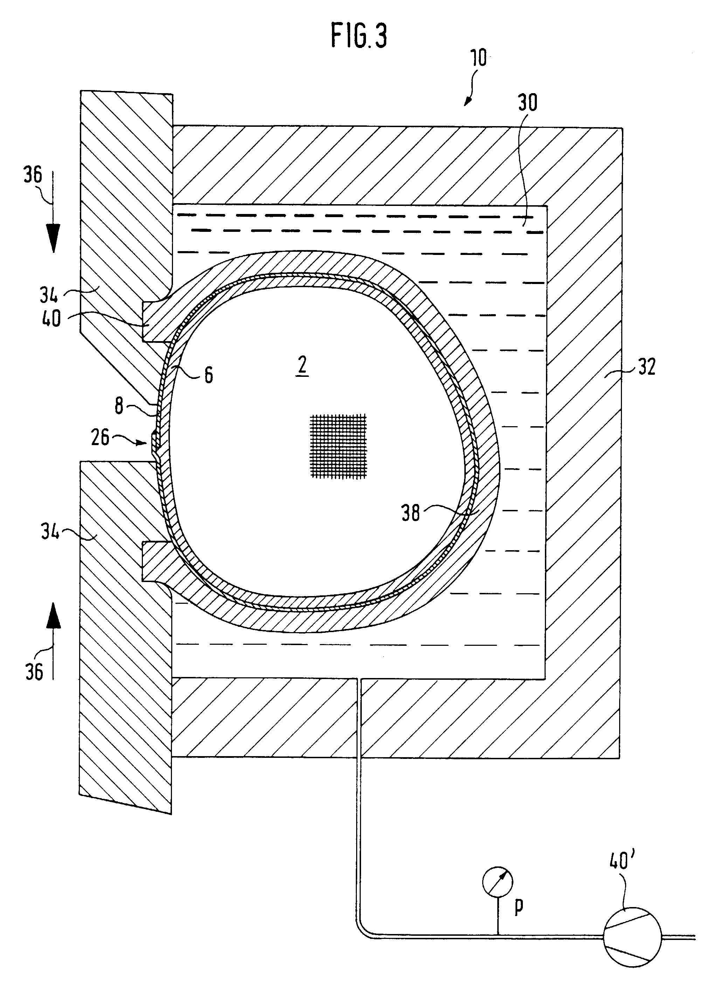

In **Fig. 3** ist veranschaulicht, daß man statt der beschriebenen Formwerkzeugteile 12, 14, 16 auch ein Formwerkzeug 10 einsetzen kann, das nach dem Prinzip der hydrostatischen Presse aufgebaut ist und arbeitet. Eine Fluidkammer 30 ist an drei Seiten des gezeichneten Querschnitts durch ebene Wände 32 begrenzt. An der vierten Seite sind zwei Wandteile 34 vorhanden, die durch Bewegung längs Pfeil 36 in ihrer Erstreckungsebene weiter aufeinanderzu oder weiter voneinanderwegbewegt werden können. Eine - grob gesprochen - im gezeichneten Querschnitt C-förmige, flexible Fluidkammerwand 38, z.B. aus einem gummiartigen Material, ist mit ihren freien Längsendbereichen 40 in den beweglichen Wandteilen 34 verankert und stellt eine innere Begrenzung der Fluidkammer 30 dar.

Wenn die beweglichen Wandteile 34 entgegen der Richtung der Pfeile 36 auseinandergefahren sind (nicht zeichnerisch dargestellt), besteht ein so großer Freiraum, daß ein vorgebogener Blechzuschnitt und der von der Lagerungsmatte 6 umgebene Abgasbehandlungskörper 2 in Axialrichtung in die innere, "trockene" Seite der flexiblen Fluidkammerwand 38 eingebracht werden können. Danach wird die mit einer Flüssigkeit gefüllte Fluidkammer 30 mittels einer Pumpe 40 unter Druck gesetzt. Außerdem werden die bewegbaren Wandteile 34 aufeinander zu bewegt. Überall dort, wo die flexible Fluidkammerwand 38 an der Ummantelung 8 anliegt, wird diese mit perfekt gleichmäßiger Pressung gegen die Lagerungsmatte 6 und damit indirekt den Abgasbehandlungskörper 2 gedrückt. Es versteht sich, daß die Fluidkammer 30 an ihren axialen Enden, d.h. vor und hinter der Zeichnungsebene, in dieser Phase ebenfalls abgeschlossen ist. Die Blechüberlappung 26 und die herzustellende Längsnaht 28 befinden sich in dem Freiraum zwischen den beiden bewegbaren Wandteilen 34.

Es wird darauf hingewiesen, daß man die in **Fig. 3** gezeichnete, einheitliche Fluidkammer 30 auch durch mehrere, über den Umfang des Abgasbehandlungskörpers verteilte Fluidkammern ersetzen kann.

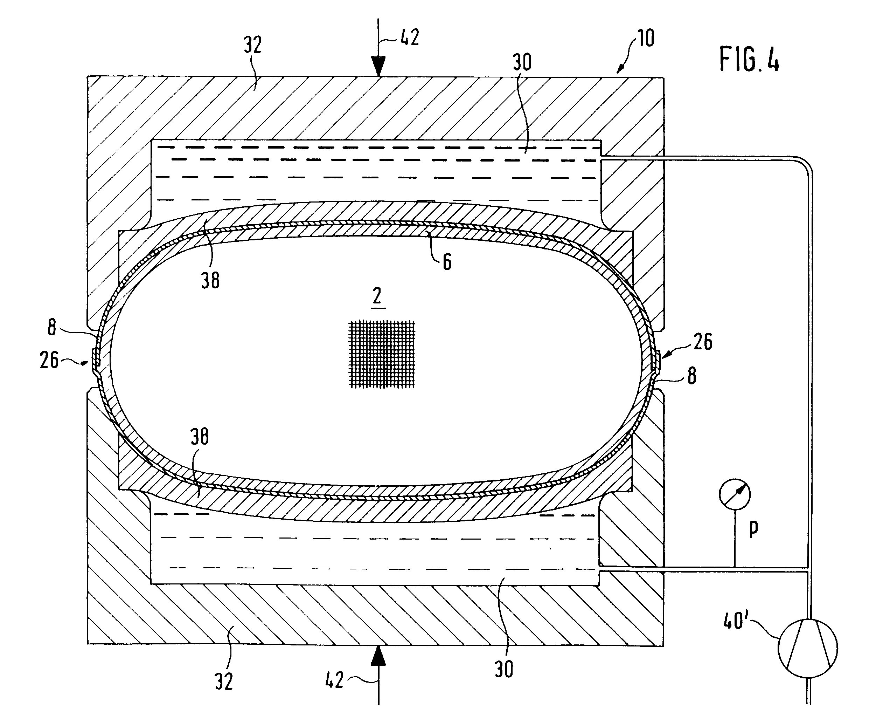

In **Fig. 4** ist veranschaulicht, wie ein nach dem Prinzip der hydrostatischen Presse aufgebautes Formwerkzeug 10 ausgebildet sein kann, wenn man - analog dem Übergang von **Fig. 1** auf **Fig. 2** - mit zwei Blechzuschnitten und zwei Längs-Schweißnähten arbeitet. Man erkennt, daß in diesem Fall jede Formwerkzeughälfte einfacher, d.h. ohne bewegliche Wandteile, aufgebaut sein kann. Zum Einlegen und Entnehmen lassen sich die beiden Formwerkzeughälften entsprechend den Pfeilen 42 aufeinanderzu und voneinanderweg bewegen.

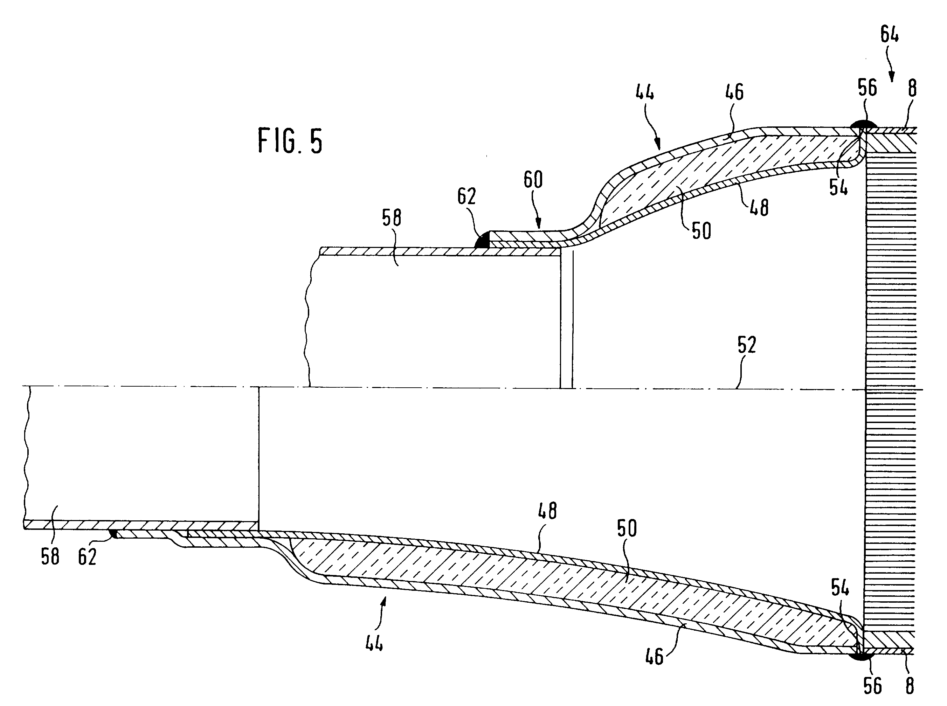

In **Fig. 5** ist veranschaulicht, wie ein Zuströmtrichter 44 mit seinem rechten Ende mit dem linken Axialende der Ummantelung 8 eines Abgasbehandlungskörpers 2 verschweißt ist. Der Trichter 44 ist doppelwandig mit Außenwand 46 und Innenwand 48. Zwischen der Außenwand 46 und der Innenwand 48 befindet sich eine an sich bekannte Isoliermatte 50. In ihrem in **Fig. 5** rechten Endbereich ist die Innenwand 48 so umgebogen, daß sie in einer Ebene rechtwinkelig zur Längsachse 52 der Abgasbehandlungsvorrichtung nach außen führt und die dortige, axial weisende Endkante der Außenwand 46 überdeckt. Die radial nach außen weisende Kante der Innenwand 48 ist mit 54 bezeichnet.

Mit einer einzigen Umfangs-Schweißnaht 56 sind das linke Axialende der Ummantelung 8, das Ende der Trichter-Innenwand 48 und das rechte Axialende der Trichter-Außenwand 46 miteinander verschweißt. Die Schweißung ist radial gerichtet, so daß mit einer einzigen Schweißung die beschriebene Dreifachnaht hergestellt werden kann.

Analog ist am rechten Axialende der Ummantelung 8 der nicht gezeichnete Abströmtrichter angeschweißt.

In **Fig. 5** ist ferner die Ausbildung des linken, an einer Abgasleitung 58 befestigten Endbereichs des Trichters 44 veranschaulicht, und zwar in **Fig. 5** oben in einer ersten Variante und in **Fig. 5** unten in einer zweiten Variante. Die obere Variante eignet sich besonders für in Axialrichtung relativ kurze Trichter 44, bei denen die Wärmedehnungsunterschiede zwischen der Außenwand 46 und der Innenwand 48 noch keine sehr erheblichen Längen ausmachen. Im linken Endbereich 60 des Trichters 44 liegen die Außenwand 46 und die Innenwand 48 ohne Isoliermatte dazwischen aneinander an und sind am Ende mit einer gemeinsamen Kehlnahtschweißung 62 mit der Abgasleitung verbunden.

Die Variante in **Fig. 5** unten bezieht sich auf in Axialrichtung längere Trichter 44. Hier ist der linke Endbereich der Innenwand 48 mit einem an sich bekannten Schiebesitz zwischen der Abgasleitung 58 und der Außenwand 46 aufgenommen. Die Außenwand 46 ist mit einer Kehlnahtschweißung 62 mit der Abgasleitung 58 verschweißt.

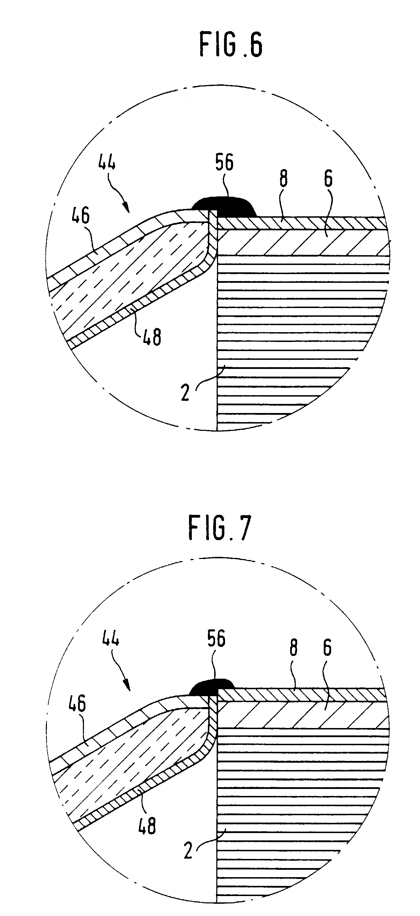

**Fig. 6** veranschaulicht, wie die beschriebene Dreifachnaht 56 aussieht, wenn die Ummantelung 8 an ihrem linken Axialende einen etwas kleineren Außenumfang als der Trichter 44 an seinem rechten Ende hat. In **Fig. 7** ist der umgekehrte Fall dargestellt, nämlich etwas größerer Außenumfang der Ummantelung 8 als der Trichter 44. Die **Fig. 6 und 7** sollen veranschaulichen, daß mit der beschriebenen Art der Umfangsschweißung, gerichtet auf die Kante des Endbereichs der Innenwand 48, derartige Umfangsunterschiede, wie sie sich aufgrund von Dimensionierungstoleranzen insbesondere des Abgasbehandlungskörpers 2 ergeben, technisch elegant aufgefangen werden können.

Wenn man eine Abgasbehandlungsvorrichtung 64 mit zwei in Axialrichtung mit Abstand hintereinander angeordneten Abgasbehandlungskörpern 2 hat, arbeitet man vorzugsweise gleichzeitig oder nacheinander mit einem Formwerkzeug je Abgasbehandlungskörper 2.

Die Erfindung ist ganz besonders gut dafür geeignet, Abgasbehandlungsvorrichtungen 64 in Modulbauweise nach dem Baukastenprinzip herzustellen. Man kann eine Typenreihe von "Mittelteilen", d.h. ein oder mehrere Abgasbehandlungskörper 2 verpackt in Ummantelung 8, mit unterschiedlichen axialen Längen und gegebenenfalls auch in unterschiedlich großen Querschnittsdimensionen vorsehen. Hieran werden Trichter 44 aus einer standardisierten Anzahl angeschweißt, wobei sich die Trichter 44 in axialer Länge, Querschnittsform am Abgasbehandlungskörperseitigen Ende, Durchmesser am anderen Ende, Krümmungs- oder Abbiegungsverlauf und dergleichen unterscheiden können. Auf diese Weise kann man mit reduziertem Konstruktions- und Herstellungsaufwand eine Vielzahl von Kraftfahrzeugmodellen mit unterschiedlichem Verlauf des Abgasstrangs und unterschiedlicher Motorleistung bewältigen.

Die erfindungsgemäßen Abgasbehandlungsvorrichtungen sind vorzugsweise für den Abgasstrang von Verbrennungsmotoren vorgesehen.

Zum Schluß sei noch betont, daß man die Ummantelung 8 wahlweise aus einem Doppelblech fertigen kann, dessen zwei Blechschichten miteinander verklebt sind. Die Ausführung der Ummantelung 8 mit derartigem Doppelblech führt zu einer Reduktion der Schallemission von der Abgasbehandlungsvorrichtung. Da die Ummantelung 8 im Betrieb der Abgasbehandlungsvorrichtung 64 wesentlich weniger stark aufgeheizt wird als z.B. die Innenwand 48 der Trichter 44, sind heute Klebstoffe verfügbar, die eine hinreichend temperaturfeste Verklebung der beiden Schichten des Doppelblechs leisten.

## Patentansprüche (Patentansprüche für folgende(n) Vertragsstaat(en): DE)

1. Abgasbehandlungsvorrichtung (64),
(a) die einen von einer Lagerungsmatte (6) umgebenen, in einer Ummantelung (8) aus Blech als Gehäuse gehalterten Abgasbehandlungskörper (2)
(b) sowie einen doppelwandigen Zuströmtrichter (44) und einen doppelwandigen Abströmtrichter (44) aufweist, die an den Endbereichen der Ummantelung (8) jeweils längs einer Umfangsnaht (56) angeschweißt sind;
(c) wobei der Zuströmtrichter (44) und der Abströmtrichter (44) jeweils am Abgasbehandlungskörper-seitigen Ende einen radial nach außen geführten Endbereich der Innenwand (48) aufweisen;
(d) und wobei die Umfangsnahtschweißungen (56) jeweils auf die Kante (54) des Endbereichs der Trichter-Innenwand (48) gerichtet ausgeführt sind, derart daß die Schweißnaht (56) die Ummantelung (8), das dortige Ende der Trichter-Innenwand (48) und das dortige Ende der Trichter-Außenwand (46) miteinander verbindet,
dadurch gekennzeichnet,
(e) daß die Ummantelung (8) jeweils mit axial verlaufendem Ende zu dem betreffenden, radial nach außen geführten Endbereich der Trichter-Innenwand (48) geführt ist;
(f) und daß bei dem Zuströmtrichter (44) und dem Abströmtrichter (44) jeweils ein axial verlaufendes Außenwand-Ende zu dem betreffenden, radial nach außen geführten Endbereich der Trichter-Innenwand (48) geführt ist,
(g) wobei die Schweißnaht (56) der jeweiligen Umfangsnahtschweißung (56) das axial verlaufende Ende der Ummantelung (8), das radial nach außen geführte Ende der Trichter-Innenwand (48) und das axial verlaufende Ende der Trichter-Außenwand (46) miteinander verbindet.

2. Abgasbehandlungsvorrichtung (64) nach Anspruch 1,
dadurch gekennzeichnet, daß die Lagerungsmatte (6) eine Quellmatte ist.

3. Abgasbehandlungsvorrichtung (64) nach Anspruch 1 oder 2,
dadurch gekennzeichnet, daß axial hintereinander mehrere Abgasbehandlungskörper (2) vorhanden sind.

4. Abgasbehandlungsvorrichtung (64) nach einem der Ansprüche 1 bis 3,
dadurch gekennzeichnet, daß die Ummantelung (8) aus einem vorverformten Blechzuschnitt oder zwei vorverformten Blechzuschnitten gebildet ist, der (die) mittels eines Formwerkzeugs (10) gegen den von der Lagerungsmatte (6) umgebenen Abgasbehandlungskörper (2) gedrückt und dadurch in die endgültige Ummantelungsform gebracht worden ist (sind);
und daß der (die) Blechzuschnitte längs einer Längsnaht (28) bzw. zweier Längsnähte (28) zu der Ummantelung (8) verschweißt ist (sind).

5. Abgasbehandlungsvorrichtung (64) nach Anspruch 4,
dadurch gekennzeichnet, daß an der Längsnaht (28) bzw. den Längsnähten (28) der Ummantelung (8) eine Blechüberlappung (26) vorhanden ist.

## Patentansprüche (Patentansprüche für folgende(n) Vertragsstaat(en): FR, GB, IT, SE)

1. Abgasbehandlungsvorrichtung (64),
(a) die einen von einer Lagerungsmatte (6) umgebenen, in einer Ummantelung (8) aus Blech als Gehäuse gehalterten Abgasbehandlungskörper (2)
(b) sowie einen doppelwandigen Zuströmtrichter (44) und einen doppelwandigen Abströmtrichter (44) aufweist, die an den Endbereichen der Ummantelung (8) jeweils längs einer Umfangsnaht (56) angeschweißt sind;
(c) wobei der Zuströmtrichter (44) und der Abströmtrichter (44) jeweils am Abgasbehandlungskörper-seitigen Ende einen radial nach außen geführten Endbereich der Innenwand (48) aufweisen;
(d) und wobei die Umfangsnahtschweißungen (56) jeweils auf die Kante (54) des Endbereichs der Trichter-Innenwand (48) gerichtet ausgeführt sind, derart daß die Schweißnaht (56) die Ummantelung (8), das dortige Ende der Trichter-Innenwand (48) und das dortige Ende der Trichter-Außenwand (46) miteinander verbindet,
dadurch gekennzeichnet,
(e) daß die Ummantelung (8) jeweils mit axial verlaufendem Ende zu dem betreffenden, radial nach außen geführten Endbereich der Trichter-Innenwand (48) geführt ist, wobei die Schweißnaht (56) der jeweiligen Umfangsnahtschweißung (56) das axial verlaufende Ende der Ummantelung (8), das radial nach außen geführte Ende der Trichter-Innenwand (48) und das dortige Ende der Trichter-Außenwand (46) miteinander verbindet.

2. Abgasbehandlungsvorrichtung (64) nach Anspruch 1,
dadurch gekennzeichnet, daß bei dem Zuströmtrichter (44) und dem Abströmtrichter (44) jeweils ein axial verlaufendes Außenwand-Ende zu dem betreffenden, radial nach außen geführten Endbereich der Trichter-Innenwand (48) geführt ist, wobei die Schweißnaht (56) der jeweiligen Umfangsnahtschweißung (56) das axial verlaufende Ende der Ummantelung (8), das radial nach außen geführte Ende der Trichter-Innenwand (48) und das axial verlaufende Ende der Trichter-Außenwand (46) miteinander verbindet.

3. Abgasbehandlungsvorrichtung (64) nach Anspruch 1 oder 2,
dadurch gekennzeichnet, daß die Lagerungsmatte (6) eine Quellmatte ist.

4. Abgasbehandlungsvorrichtung (64) nach einem der Ansprüche 1 bis 3,
dadurch gekennzeichnet, daß axial hintereinander mehrere Abgasbehandlungskörper (2) vorhanden sind.

5. Abgasbehandlungsvorrichtung (64) nach einem der Ansprüche 1 bis 4,
dadurch gekennzeichnet, daß die Ummantelung (8) aus einem vorverformten Blechzuschnitt oder zwei vorverformten Blechzuschnitten gebildet ist, der (die) mittels eines Formwerkzeugs (10) gegen den von der Lagerungsmatte (6) umgebenen Abgasbehandlungskörper (2) gedrückt und dadurch in die endgültige Ummantelungsform gebracht worden ist (sind);
und daß der (die) Blechzuschnitte längs einer Längsnaht (28) bzw. zweier Längsnähte (28) zu der Ummantelung (8) verschweißt ist (sind).

6. Abgasbehandlungsvorrichtung (64) nach Anspruch 5,
dadurch gekennzeichnet, daß an der Längsnaht (28) bzw. den Längsnähten (28) der Ummantelung (8) eine Blechüberlappung (26) vorhanden ist.

## Claims (Claims for the following Contracting State(s): DE)

1. Exhaust-gas-treatment device (64),
(a) which has an exhaust-gas-treatment body (2) surrounded by a bedding mat (6) and retained in an envelope (8) of sheet metal as casing, and
(b) a double-walled inflow funnel (44) and a double-walled outflow funnel (44), which are welded to the end regions of the envelope (8) in each case along a circumferential seam (56);
(c) the inflow funnel (44) and the outflow funnel (44), in each case at the end on the side of the exhaust-gas-treatment body, having an end region of the inner wall (48) which is directed radially outwards;
(d) and the circumferential-seam welds (56) in each case being executed so as to be oriented towards the edge (54) of the end region of the funnel inner wall (48) in such a way that the weld seam (56) connects the envelope (8), the end of the funnel inner wall (48) there and the end of the funnel outer wall (46) there to one another,
characterized in that
(e) the envelope (8) is in each case directed with an axially running end to the relevant end region, directed radially outwards, of the funnel inner wall (48),
(f) and in that, at the inflow funnel (44) and the outflow funnel (44), in each case an axially running outer-wall end is directed to the relevant end region, directed radially outwards, of the funnel inner wall (48),
(g) the weld seam (56) of the respective circumferential-seam weld (56) connecting the axially running end of the envelope (8), the end, directed radially outwards, of the funnel inner wall (48) and the axially running end of the funnel outer wall (46) to one another.

2. Exhaust-gas-treatment device (64) according to Claim 1, characterized in that the bedding mat (6) is a swelling mat.

3. Exhaust-gas-treatment device (64) according to Claim 1 or 2, characterized in that there are a plurality of exhaust-gas-treatment bodies (2) one behind the other.

4. Exhaust-gas-treatment device (64) according to one of Claims 1 to 3, characterized in that the envelope (8) is formed from a preformed sheet-metal blank or two preformed sheet-metal blanks, which has (have) been pressed by means of a forming tool (10) against the exhaust-gas-treatment body (2) surrounded by the bedding mat (6) and has (have) thereby been put into the final envelope shape; and in that the sheet-metal blank(s) is (are) welded along a longitudinal seam (28) or two longitudinal seams (28) respectively to form the envelope (8).

5. Exhaust-gas-treatment device (64) according to Claim 4, characterized in that there is a sheet-metal overlap (26) at the longitudinal seam (28) or the longitudinal seams (28) respectively of the envelope (8).

## Claims (Claims for the following Contracting State(s): FR, GB, IT, SE)

1. Exhaust-gas-treatment device (64),
(a) which has an exhaust-gas-treatment body (2) surrounded by a bedding mat (6) and retained in an envelope (8) of sheet metal as casing, and
(b) a double-walled inflow funnel (44) and a double-walled outflow funnel (44), which are welded to the end regions of the envelope (8) in each case along a circumferential seam (56);
(c) the inflow funnel (44) and the outflow funnel (44), in each case at the end on the side of the exhaust-gas-treatment body, having an end region of the inner wall (48) which is directed radially outwards;
(d) and the circumferential-seam welds (56) in each case being executed so as to be oriented towards the edge (54) of the end region of the funnel inner wall (48) in such a way that the weld seam (56) connects the envelope (8), the end of the funnel inner wall (48) there and the end of the funnel outer wall (46) there to one another,
characterized in that
(e) the envelope (8) is in each case directed with an axially running end to the relevant end region, directed radially outwards, of the funnel inner wall (48), the weld seam (56) of the respective circumferential-seam weld (56) connecting the axially running end of the envelope (8), the end, directed radially outwards, of the funnel inner wall (48) and the end of the funnel outer wall (46) there to one another.

2. Exhaust-gas-treatment device (64) according to Claim 1, characterized in that, at the inflow funnel (44) and the outflow funnel (44), in each case an axially running outer-wall end is directed to the relevant end region, directed radially outwards, of the funnel inner wall (48), the weld seam (56) of the respective circumferential-seam weld (56) connecting the axially running end of the envelope (8), the end, directed radially outwards, of the funnel inner wall (48) and the axially running end of the funnel outer wall (46) to one another.

3. Exhaust-gas-treatment device (64) according to Claim 1 or 2, characterized in that the bedding mat (6) is a swelling mat.

4. Exhaust-gas-treatment device (64) according one of Claims 1 to 3, characterized in that there are a plurality of exhaust-gas-treatment bodies (2) one behind the other.

5. Exhaust-gas-treatment device (64) according to one of Claims 1 to 4, characterized in that the envelope (8) is formed from a preformed sheet-metal blank or two preformed sheet-metal blanks, which has (have) been pressed by means of a forming tool (10) against the exhaust-gas-treatment body (2) surrounded by the bedding mat (6) and has (have) thereby been put into the final envelope shape; and in that the sheet-metal blank(s) is (are) welded along a longitudinal seam (28) or two longitudinal seams (28) respectively to form the envelope (8).

6. Exhaust-gas-treatment device (64) according to Claim 5, characterized in that there is a sheet-metal overlap (26) at the longitudinal seam (28) or the longitudinal seams (28) respectively of the envelope (8).

## Revendications (Revendications pour l'(les) Etat(s) contractant(s) suivant(s): DE)

1. Dispositif de traitement de gaz d'échappement (64),
(a) comportant un corps de traitement de gaz d'échappement (2) entouré d'une nappe souple de compensation/suspension (6) et maintenu dans une enveloppe (8) en tôle servant de boîtier ou de pot,
(b) ainsi qu'un entonnoir d'arrivée (44) à double paroi et un entonnoir de sortie (44) à double paroi, qui sont soudés aux parties extrêmes de l'enveloppe (8), chaque fois le long d'un joint périphérique (56);
(c) l'entonnoir d'arrivée (44) et l'entonnoir de sortie (44) présentant chacun, à l'extrémité côté corps de traitement de gaz d'échappement, une partie extrême dirigée radialement vers l'extérieur de la paroi interne (48);
(d) et les soudures des joints périphériques (56) étant exécutées en étant dirigées chacune vers le bord (54) de la partie extrême de la paroi interne (48) de l'entonnoir, de sorte que le joint soudé (56) relie entre elles l'enveloppe (8), l'extrémité adjacente de la paroi interne (48) de l'entonnoir et l'extrémité adjacente de la paroi externe (46) de l'entonnoir,
caractérisé en ce que
(e) l'enveloppe (8) est amenée chaque fois par une extrémité orientée axialement jusqu'à la partie extrême concernée, dirigée radialement vers l'extérieur, de la paroi interne (48) de l'entonnoir;
(f) et une extrémité orientée axialement de la paroi externe (46) de l'entonnoir d'arrivée (44) et de l'entonnoir de sortie (44) est amenée chaque fois jusqu'à la partie extrême concernée, dirigée radialement vers l'extérieur, de la paroi interne (48) de l'entonnoir,
(g) la soudure (56) formant le joint périphérique (56) respectif reliant entre elles l'extrémité orientée axialement de l'enveloppe (8), l'extrémité dirigée radialement vers l'extérieur de la paroi interne (48) de l'entonnoir et l'extrémité orientée axialement de la paroi externe (46) de l'entonnoir.

2. Dispositif de traitement de gaz d'échappement (64) selon la revendication 1, caractérisé en ce que la nappe souple (6) est une nappe gonflante.

3. Dispositif de traitement de gaz d'échappement (64) selon la revendication 1 ou 2, caractérisé en ce qu'il comprend plusieurs corps de traitement de gaz d'échappement (2) placés axialement l'un derrière l'autre.

4. Dispositif de traitement de gaz d'échappement (64) selon une des revendications 1 à 3, caractérisé en ce que l'enveloppe (8) est formée d'une découpe de tôle prédéformée ou de deux découpes de tôle prédéformées qui est ou sont pressée(s) au moyen d'un outil de formage (10) contre le corps de traitement (2), entouré de la nappe souple (6), et est ou sont ainsi amenée(s) à la forme définitive de l'enveloppe; et que les bords longitudinaux de la ou des découpes de tôle sont soudés ensemble le long d'un joint longitudinal (28) ou de deux joints longitudinaux (28) pour réaliser l'enveloppe (8).

5. Dispositif de traitement de gaz d'échappement (64) selon la revendication 4, caractérisé en ce qu'un recouvrement de tôle (26) est prévu au droit du joint longitudinal (28) ou des joints longitudinaux (28) de l'enveloppe (8).

## Revendications (Revendications pour l'(les) Etat(s) contractant(s) suivant(s): FR, GB, IT, SE)

1. Dispositif de traitement de gaz d'échappement (64),
(a) comportant un corps de traitement de gaz d'échappement (2) entouré d'une nappe souple de compensation/suspension (6) et maintenu dans une enveloppe (8) en tôle servant de boîtier ou de pot,
(b) ainsi qu'un entonnoir d'arrivée (44) à double paroi et un entonnoir de sortie (44) à double paroi, qui sont soudés aux parties extrêmes de l'enveloppe (8), chaque fois le long d'un joint périphérique (56);
(c) l'entonnoir d'arrivée (44) et l'entonnoir de sortie (44) présentant chacun, à l'extrémité côté corps de traitement de gaz d'échappement, une partie extrême dirigée radialement vers l'extérieur de la paroi interne (48);
(d) et les soudures des joints périphériques (56) étant exécutées en étant dirigées chacune vers le bord (54) de la partie extrême de la paroi interne (48) de l'entonnoir, de sorte que le joint soudé (56) relie entre elles l'enveloppe (8), l'extrémité adjacente de la paroi interne (48) de l'entonnoir et l'extrémité adjacente de la paroi externe (46) de l'entonnoir,
caractérisé en ce que
(e) l'enveloppe (8) est amenée chaque fois par une extrémité orientée axialement jusqu'à la partie extrême concernée, dirigée radialement vers l'extérieur, de la paroi interne (48) de l'entonnoir, la soudure (56) formant le joint périphérique (56) respectif reliant entre elles l'extrémité orientée axialement de l'enveloppe (8), l'extrémité dirigée radialement vers l'extérieur de la paroi interne (48) de l'entonnoir et l'extrémité adjacente de la paroi externe (46) de l'entonnoir.

2. Dispositif de traitement de gaz d'échappement (64) selon la revendication 1, caractérisé en ce qu'une extrémité orientée axialement de la paroi externe (46) de l'entonnoir d'arrivée (44) et de l'entonnoir de sortie (44) est amenée chaque fois jusqu'à la partie extrême concernée, dirigée radialement vers l'extérieur, de la paroi interne (48) de l'entonnoir, la soudure (56) formant le joint périphérique (56) respectif reliant entre elles l'extrémité orientée axialement de l'enveloppe (8), l'extrémité dirigée radialement vers l'extérieur de la paroi interne (48) de l'entonnoir et l'extrémité orientée axialement de la paroi externe (46) de l'entonnoir.

3. Dispositif de traitement de gaz d'échappement (64) selon la revendication 1 ou 2, caractérisé en ce que la nappe souple (6) est une nappe gonflante.

4. Dispositif de traitement de gaz d'échappement (64) selon une des revendications 1 à 3, caractérisé en ce qu'il comprend plusieurs corps de traitement de gaz d'échappement (2) placés axialement l'un derrière l'autre.

5. Dispositif de traitement de gaz d'échappement (64) selon une des revendications 1 à 4, caractérisé en ce que l'enveloppe (8) est formée d'une découpe de tôle prédéformée ou de deux découpes de tôle prédéformées qui est ou sont pressée(s) au moyen d'un outil de formage (10) contre le corps de traitement (2), entouré de la nappe souple (6), et est ou sont ainsi amenée(s) à la forme définitive de l'enveloppe; et que les bords longitudinaux de la ou des découpes de tôle sont soudés ensemble le long d'un joint longitudinal (28) ou de deux joints longitudinaux (28) pour réaliser l'enveloppe (8).

6. Dispositif de traitement de gaz d'échappement (64) selon la revendication 5, caractérisé en ce qu'un recouvrement de tôle (26) est prévu au droit du joint longitudinal (28) ou des joints longitudinaux (28) de l'enveloppe (8).
